# EUROPEAN PATENT APPLICATION

(11) **EP 3 354 324 A1**
(43) Date of publication of application: **01.08.2018**
(21) Application number: 16843714.3
(22) Date of filing: 06.09.2016
(51) Int. Cl.: A63B 33/00, A42B 3/14

(54) **SWIMMING GOGGLES WITH ADJUSTMENT SYSTEM**

(30) Priority: 07.09.2015 ES 201531279
(71) Applicant: Decathlon, 59650 Villeneuve D'ascq (FR)
(72) Inventor: SOUWEINE CAPELLA, Juan Carlos, 08017 Barcelona (ES); GORETTI, Antonello, 08017 Barcelona (ES)
(74) Representative: Sayettat, Julien Christian
(86) International application number: PCT/ES2016/070625
(87) International publication number: WO 2017/042409

(57) **Abstract**

The invention relates to swimming goggles with an adjustment system, which comprise two temples joined at their rear part by a mechanism for adjusting the length of the temples for the anatomical adjustment of the goggles to the use's head.

## Description

The present invention is related to the sports sector and more specifically to the sector of goggles for swimming. More particularly, the present invention relates to an adjusting mechanism for swimming goggles.

The known systems for holding the goggles to the swimmer's head are made up of flexible elastic bands which have different degrees of elasticity and which are made of different materials. The strips are adjusted by a drive system that is generally complicated, usually based on the sliding of the elastic strips through a slot, or two, of different material. Adjusting said goggles is tedious and uncomfortable because sliding the strips through the slots is complicated. In addition, the strips become worn by the chafing that takes place when said strips are passed through the slots, and therefore are prone to breaking after repeated use.

Furthermore, flexible elastic strips of known systems for adjusting goggles do not uniformly distribute pressure on the swimmer's head, causing physical discomfort to the swimmer's head.

The wheel and pinion type of adjuster is known in helmets used in cycling, however, in this case said adjuster does not properly adjust to the anatomy of the wearer's head, causing inconvenience and/or discomfort.

In view of the foregoing, one aspect of the subject matter of the present invention is to overcome the disadvantages of known adjusters for swimming goggles.

In order to accomplish the objectives thereof, the present invention provides swimming goggles with an adjustment system comprising two temples joined at the rear by a mechanism for adjusting the length of the temples to the anatomically adjust the goggles to the head of a user. Optionally, said mechanism for adjusting the length of the temples comprises a drive wheel for driving said mechanism, which preferably consists of a rack mechanism driven by said drive wheel.

The mechanism for adjusting the length of the temples of the goggles allows the goggles to be anatomically adjusted with the simple turn of a wheel. The mechanism allows continuous micrometric adjustment, i.e., the position of the temples can be adjusted very accurately and without the different setting positions being at intervals.

In one embodiment of the invention, the temple length adjustment mechanism comprises an anatomical housing for receiving the temples. Also, optionally, the temple length adjustment mechanism comprises at least one support element which comes into contact with the occipital part of the head of a user and prevents rubbing of the temples with the skin in said part. Thus, the user can operate the adjustment mechanism without the displacement movement of the temples or the rotation of the wheel causing physical discomfort due to, for example, rubbing.

Preferably, the temples are hingedly connected to the front of the goggles. More preferably, the front of the goggles comprises more than one hole which receives a protrusion situated on the temple for a hinge connection between the temples and the front of the goggles, being able to extract and insert the protrusion of the temple into said holes manually. The user can place the temples in the position most suited to their head size, and then adjust the temple length using the adjustment mechanism to achieve anatomical adaptation.

Preferably, the temples are made of a semi-rigid material, so that the temples are made of a more resistant to possible friction with the different elements of the adjustment mechanism, eliminating the risk of breakage due to wear and tear on the temples.

In one embodiment of the invention, the temples have an anatomical shape to favour the perfect fit of the goggles to the contour of the head of a user.

Preferably, the goggles comprise a seal for each lens, to favour adaptation of the lenses to the face of a user preventing water from getting into the eye area.

For better understanding, some drawings, which are explanatory in nature and non-limiting, of an embodiment of the goggles with the adjustment system that is the subject matter of the present invention are attached hereto.
Figure 1 shows a perspective view of swimming goggles including an embodiment of the adjustment system that is the subject matter of the present invention.
Figure 2 shows an elevational view of the rear of the swimming goggles of Figure 1, positioned around the head of a user.
Figure 3 shows a profile view of goggles with a second embodiment of the adjustment system that is the subject matter of the present invention, positioned around the head of a user.
Figure 4 shows a profile view of goggles with a third embodiment of the adjustment system that is the subject matter of the present invention and an enlarged detail of the zone between the pin and the lenses of said third embodiment.

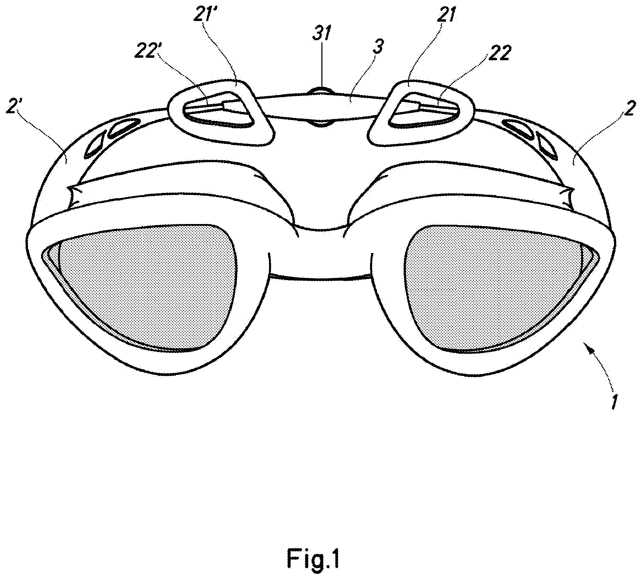

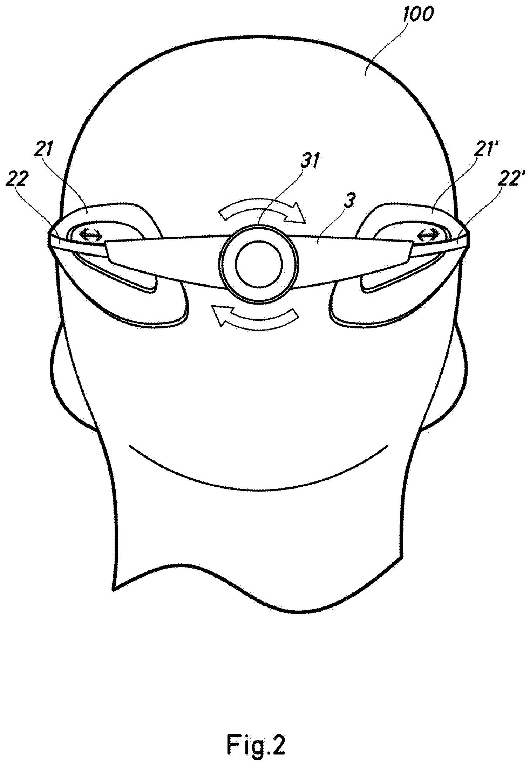

A first embodiment of the swimming goggles adjustment system that is the subject matter of the present invention shown in Figures 1 and 2. The goggles (1) are fastened to the head of a user (100) by a peripheral frame surrounding the head user formed by two temples (2, 2') of semi-rigid plastic material joined at the rear by an adjustment mechanism (3) in the respective narrowing areas thereof (22, 22'). The small width of the temples (2, 2') in the narrowing areas thereof (22, 22') favours inward and outward movement of the adjustment mechanism (3).

The adjustment mechanism (3) is situated at the rear of the goggles (1) and comprises a wheel (31) which is used to actuate the length adjustment mechanism of the temples (2, 2') by means of wheel and rack. By rotating the wheel (31) (see the rotation arrows in Figure 2) the temple (2, 2') narrowing areas (22, 22') are moved inward or outward (see the direction arrows in Figure 2) with respect to the adjustment mechanism (3), accomplishing the adjustment of the length of the temples (2, 2') and thus adjusting the perimeter frame that both temples (2, 2') form together with the adjustment mechanism (3). The small width of the temples (2, 2') in the narrowing areas thereof (22, 22') allows inward and outward movement of the adjustment mechanism (3).

The adjustment mechanism (3) comprises two support parts (21, 21') that come into contact with the occipital part of the user's head to protect same from the rubbing that can be caused by the movement of the narrowing areas (22, 22') of the temples (2, 2') when the wheel (31) of the adjustment mechanism (3) is driven.

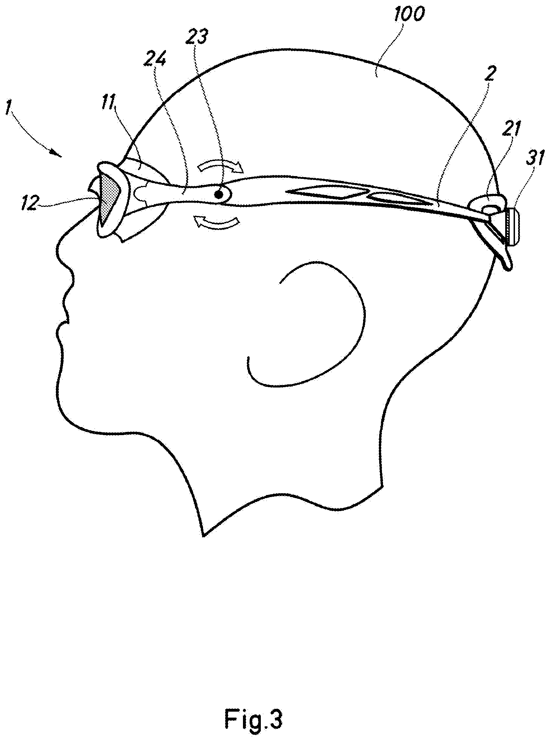

As seen in the embodiment of Figure 3, the goggles comprise lenses (12) on the front of the goggles (1). The goggles (1) adapt to the eye area of the user by seals (11) that prevent physical discomfort from the contact of the goggles. In this embodiment, the front part of the goggles ends in an end piece (24) which connects to the temple (2) hingedly by means of a hinge (23). Due to said hinge (23), the temple (2) may be arranged at different angles relative to the end piece (24), allowing the user to adjust the support parts (21, 21') of the adjustment mechanism (3) vertically on the back of the head (100) and place the temples in the position that is most comfortable.

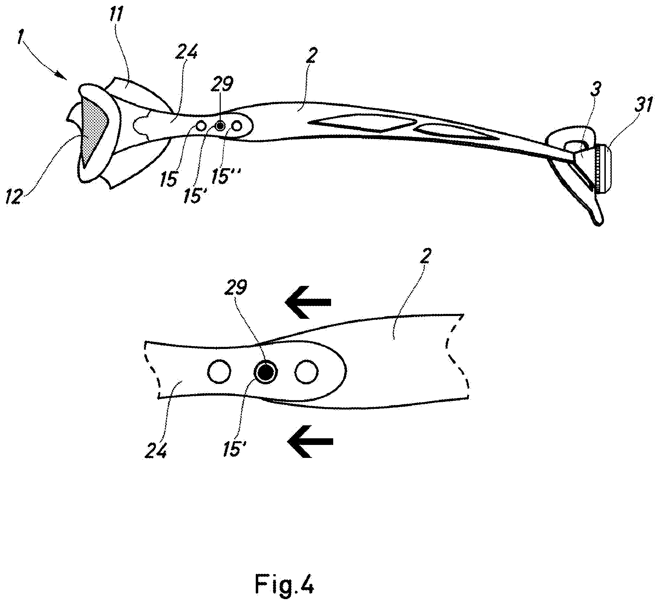

In the embodiment shown in Figure 4, the front of the goggles (1) also ends in an end piece (24). The joint of said end piece (24) and the temple (2) may be set at three different positions. The end piece (24) comprises three holes (15, 15', 15") in which a protrusion (29) is inserted, said protrusion arranged at the end of the temple (2), to attach the temple (2) to the end piece (24). This type of joint is hinged, as in the case of the embodiment of figure 3, and can also be moved along the end piece (24) for the goggles (1) to better fit the user's head (100). The protrusion (29) of the temple (2) can be extracted from the holes (15, 15', 15") and can be re-entered manually to achieve said fit (see arrows in figure 4).

The holes and the projection are shown with a circular shape but can take any shape that permits articulated connection between the temple and the end piece and manual adjustment between the different positions.

While the invention has been shown and described with reference to embodiments thereof, it shall be understood that same do not limit the invention, so that there could be multiple variables in construction or other details that may be apparent to a person skilled in the art after interpreting the material disclosed in the present description, claims and drawings. Thus, all variants and equivalents shall be included within the scope of the present invention if same can be considered to be within the broadest scope of the following claims.

## Claims

1. Swimming goggles with an adjustment system, **characterized in that** same comprise two temples joined at the rear by an adjustment mechanism for adjusting the length of the temples to the anatomical fit of the goggles to the head of a user.

2. Goggles according to claim 1, **characterized in that** said adjustment mechanism of the length of the temples comprises a dive wheel for driving the mechanism.

3. Goggles according to claim 2, **characterized in that** the adjustment mechanism for adjusting the temple length is a rack driven by said drive wheel.

4. Goggles according to claim 3, **characterized in that** the temple length adjusting mechanism comprises an anatomical housing that receives the temples.

5. Goggles according to claim 4, **characterized in that** the temple length adjustment mechanism comprises at least one support part that comes into contact with the occipital part of the head of a user and prevents rubbing of the temples on the skin of said part.

6. Goggles according to claim 5, **characterized in that** the temples are hingedly joined to the front of the goggles.

7. Goggles according to claim 6, **characterized in that** the front of the goggles comprises more than one hole which receives a protrusion on the temple to make a hinge connection between the temples and the front of the goggles, wherein said temple protrusion can be extracted from and inserted into said holes manually.

8. Goggles according to claim 7, **characterized in that** the temples are made of a semi-rigid material.

9. Goggles according to claim 8, **characterized in that** the temples have an anatomical shape to favour the perfect fit of the goggles to the contour of the head of a user.

10. Goggles according to claim 9, **characterized in that** it comprising a seal for each lens to promote adaptation of the lenses to the face of a user preventing water from going into the eye area.
